# EUROPEAN PATENT APPLICATION

(11) **EP 4 495 273 A1**
(43) Date of publication of application: **22.01.2025**
(21) Application number: 24183417.5
(22) Date of filing: 20.06.2024
(51) Int. Cl.: C21D 1/34, C21D 1/26, C21D 8/12, C21D 9/00, C21D 9/46, C21D 11/00, C22F 1/10, C21D 6/00, H02K 21/12, H02K 1/02, H02K 16/02, H01F 1/147, H01F 41/02, F27B 5/00, F27B 17/00, B64C 29/00, C22C 19/07, C22C 38/00, C22C 38/10, C22C 38/12, C22C 38/16, C21D 1/76, C22F 1/02

(54) **A METHOD AND A SYSTEM FOR TREATING AN IRON-COBALT COMPONENT, A METHOD OF FORMING A STATOR FOR A TRANSVERSE FLUX ELECTRICAL MACHINE, A TRANSVERSE FLUX ELECTRICAL MACHINE**

(30) Priority: 17.07.2023 GB 202310904
(71) Applicant: Rolls-Royce plc, London N1 9FX (GB)
(72) Inventor: Chen, Zhong, Derby, DE24 8BJ (GB); Li, Zhiqiang, Derby, DE24 8BJ (GB); Oh, Joo Tien, Derby, DE24 8BJ (GB); Gill, Vincent, Derby, DE24 8BJ (GB); Lambourne, Alexis, Derby, DE24 8BJ (GB)
(74) Representative: Rolls-Royce plc

(57) **Abstract**

A method 600 of treating an iron-cobalt component is disclosed. The method comprises: 604 heat treating the component using a temperature of at least 700 °C; 606 applying a static magnetic field of at least 3000 Aim to the component during the heat treatment. Also disclosed is a furnace 500 for treating the iron-cobalt component, and a method of forming a stator 12 for a transverse flux electric machine 14.

## Description

### TECHNICAL FIELD

This disclosure concerns a method of treating an iron-cobalt component, and is particularly, although not exclusively, concerned with a method of magnetic field annealing an iron-cobalt lamination for a stator core.

### BACKGROUND

Iron-cobalt (FeCo) alloys are soft magnetic materials often used in the form of thin laminations for stators and rotors in electrical machines. These materials are preferred over conventional electric steels due to their magnetic properties, including a higher magnetic saturation (~2.3 T) compared with Si-steel (~1.8 T).

The mechanical and magnetic properties of FeCo alloys are largely determined by the treatment processes to which they are subjected. Higher heat treatment temperatures and longer heat treatment times generally achieve larger grains, which provide better magnetic properties. Lower heat treatment temperatures and shorter heat treatment times generally achieve smaller grains, which provide better mechanical properties. The magnetic and mechanical properties of an FeCo alloy are therefore essentially competing; the mechanical properties achievable for a desired magnetic property may be limited and *vice versa.* Accordingly, FeCo alloys are typically heat treated at times and temperatures which achieve a balance between mechanical and magnetic properties.

For FeCo alloys, it remains desirable to improve the magnetic properties achievable for a given mechanical property, and *vice versa.*

### SUMMARY

According to a first aspect, there is provided a method. The method may be a method of treating (e.g., processing, heat treating and/or magnetic field annealing) an iron-cobalt (FeCo) alloy (e.g., a component comprising an FeCo alloy, or an FeCo component). The method may comprise providing an FeCo component (e.g., an FeCo article such as a FeCo lamination) or FeCo alloy. The FeCo component or alloy may be an FeCo-2V component or alloy. The method may comprise heating the component or alloy (e.g., at a temperature of at least 700 °C). The method may comprise heat treating the component. The heat treatment (e.g., a holding phase thereof) may last for a duration of at least 1 hour, such as at least 3 hours, such as at least 6 hours, such as up to 9 hours. The method may comprise applying a static magnetic field (e.g., of at least 3000 A/m) to the component, such as at least partially during the heat treatment (e.g., during part or all of the heat treatment). The method may comprise magnetic field annealing the alloy or component (e.g., annealing in the presence of an applied magnetic field). The present aspect may form part of and/or be used in conjunction with any of the following aspects.

According to a second aspect, there is provided a method of treating an iron-cobalt component (e.g., an FeCo article), the method comprising: heat treating the component using a temperature of at least 700 °C; applying a static magnetic field of at least 3000 A/m to the component during the heat treatment. The method may be a method of magnetic field annealing an FeCo component.

Heat treating the component may comprise: heating the component (e.g., from room temperature) to a hold temperature; holding the component at the hold temperature for a hold duration; and cooling the component from the hold temperature (e.g., towards or to room temperature, or towards or to a relatively low temperature such as 150 °C). Accordingly, the heat treatment may comprise a heating phase, a holding phase and a cooling phase. The heating phase may have a heating rate of about 15 °C/min (e.g., 5°C/min to 20°C/min, such as 10 °C/min to 20°C/min). The cooling phase may have a cooling rate of about 5 °C/min (e.g., 3°C/min to 10°C/min).

The magnetic field may be applied to the whole component. The magnetic field may be applied during at least part of: the heating phase; the holding phase; and/or the cooling phase. The time(s) during which the magnetic field is applied may coincide at least partially with the heating phase; the holding phase; and/or the cooling phase. The magnetic field may be applied throughout the heating phase; the holding phase and/or the cooling phase. For example, the magnetic field may be applied throughout the heat treatment. The magnetic field may be applied: only during the cooling phase; only during the holding phase; or only during the holding and cooling phases.

Heat treating the component using a temperature of at least 700 °C may comprise heat treating the component using a temperature of at least 750 °C, such as at least 800 °C, such as at least 850 °C, such as at least 880 °C. Heat treating the component using a temperature of at least 700 °C may comprise heat treating the component using a temperature of up to 900 °C, such as up to 880 °C, such as up to 850 °C, such as up to 800 °C, such as up to 750 °C. For example, the component may be heat treated using a temperature between 700 and 900 °C, such as between 750 and 880 °C, such as between 750 and 800 °C or between 800 and 880 °C, such as between 800 and 850 °C or between 850 and 880 °C. The above temperatures may refer to the holding temperature (e.g., the temperature during the holding phase).

The heat treatment may have a holding phase of at least 1 hour, such as at least 3 hours, such as 9 hours. The heat treatment may have a holding phase of up to 9 hours, such as up to 6 hours, such as up to 3 hours. The heat treatment may have a holding phase of between 1 and 9 hours, such as between 1 and 3 hours or between 3 and 9 hours, such as between 3 and 6 hours or between 6 and 9 hours. The heat treatment may have a holding phase of 3 hours, 6 hours or 9 hours.

Heat treating the component may comprise heat treating the component using a temperature of at least 700 °C for a duration of at least 1 hour, such as at least 3 hours, such as at least 6 hours, such as 9 hours. Heat treating the component may comprise heat treating the component using a temperature of at least 700 °C for a duration of up to 9 hours, such as up to 6 hours, such as up to 3 hours. For example, the heat treatment may use a temperature of at least 700 °C for a duration between 1 and 9 hours, such as between 3 and 9 hours, such as between 3 and 6 hours or between 6 and 9 hours. The above durations may refer to the duration of the holding phase (e.g., the time kept at a substantially constant temperature). The heat treatment may use a temperature of at least 700 °C for a duration of 3 hours, 6 hours or 9 hours.

Heat treating the component may comprise heat treating the component using a temperature of at least 700 °C for a duration of at least 1 hour. Heat treating the component may comprise heat treating the component using a temperature of up to 900 °C for a duration of up to 9 hours. The heat treatment may have a holding temperature of between 700 and 900 °C for a duration between 1 and 9 hours, such as between 3 and 9 hours. The heat treatment may have a holding temperature between 750 and 880 °C for a duration between 1 and 9 hours, such as between 3 and 9 hours, such as between 3 and 6 hours or between 6 and 9 hours. The heat treatment may use a temperature between 750 and 880 °C for a duration of 3 hours, 6 hours or 9 hours.

Applying a static magnetic field of at least 3000 A/m may comprise applying a static magnetic field of at least 3300 A/m, such as at least 4000 A/m, such as at least 5000 A/m, such as at least 5500 A/m. Applying a static magnetic field of at least 3000 A/m may comprise applying a static magnetic field of up to 6000 A/m, such as up to 5500 A/m, such as up to 5000 A/m, such as up to 4000 A/m. For example, the applied magnetic field may be between 3000 and 6000 A/m, such as between 3300 and 6000 A/m, such as between 5500 and 6000 A/m or between 3300 and 5500 A/m, such as between 4000 and 5500 A/m, such as between 5000 and 5500 A/m. The magnetic field may have a strength of 3300 A/m or 5500 A/m.

In an example, the method comprises heat treating the component using a hold temperature between 700 and 900 °C for a hold duration between 1 and 9 hours with a static magnetic field of at least 3000 A/m, optionally up to 6000 A/m, applied during at least a part of (e.g., throughout) the heat treatment. In a preferred example, the method comprises: heat treating the component using a hold temperature between about 750 °C and about 880 °C for a hold duration between about 3 hours and about 9 hours; and applying a static magnetic field of between 3000 and 6000 A/m. In a most preferred example, the hold temperature is about 880 °C, the hold duration is between about 3h and about 6h, and a static magnetic field of about 5500 A/m is applied throughout the heat treatment.

Applying a static magnetic field may comprise applying a static magnetic field using a conductive coil (e.g., solenoid) and a direct current flowing therethrough. The magnetic field may thereby be substantially uniform (e.g., having substantially parallel magnetic field vectors), aligned and/or unidirectional within the conductive coil. The magnetic field may be substantially spatially uniform across the or each component. Preferably, the static magnetic field may not be applied by permanent magnets.

The method may additionally comprise providing the component within a reducing (e.g., hydrogen) atmosphere (e.g., treating the component in a reducing atmosphere).

The component may comprise an iron-cobalt lamination for a stator core of an electrical machine, such as a transverse flux electrical machine, an axial flux electrical machine or a radial flux electrical machine. The method may be particularly suitable for the treatment of stator laminations of transverse flux electrical machines. This is because the method may produce a directional increase in magnetic permeability, and the direction of the magnetic flux passing through the stator core of a transverse flux machine may be much more directional than in, e.g., a radial flux machine.

The method may comprise aligning an axis, dimension or other feature of the component with the applied static magnetic field. For example, if the component comprises a lamination for a stator core, the method may comprise aligning an in-plane direction (e.g., length direction or width direction) or an out-of-plane direction (e.g., thickness direction) of the lamination with the magnetic field.

The component may be heated uniformly, such as spatially uniformly (e.g., not by inductive heating). The component may be heated by convection and/or conduction.

The method could be used to prepare soft magnetic laminations for electrical machines (e.g., motors, generators or actuators) or transformers, or magnetic chokes and filters.

The present aspect may form part of and/or be used in conjunction with any other aspect.

According to a third aspect, there is provided a method of forming (e.g., manufacturing and/or assembling) a stator for a transverse flux electrical machine, the method comprising: treating a plurality of laminations according to the method of the first or second aspects; assembling a plurality of stator cores from the plurality of laminations; assembling a stator from the plurality of stator cores.

According to a fourth aspect, there is provided a controller configured to perform the method of the first or second aspects. The present aspect may form part of and/or be used in conjunction with any other aspect.

According to a fifth aspect, there is provided a furnace. The furnace may be a furnace for magnetic field annealing. The furnace may comprise a receptacle (e.g., tube) for receiving a component (e.g., a component to be annealed). The furnace may comprise a heating element in thermal communication with the receptacle. The furnace may comprise an electrically conductive coil for generating a static magnetic field within the receptacle. The coil may be provided externally to the receptacle. The present aspect may form part of and/or be used in conjunction with the sixth aspect.

According to a sixth aspect, there is provided a tube furnace for magnetic field annealing, the furnace comprising: a tube for receiving a component to be annealed; a heating element in thermal communication with the tube; an electrically conductive coil for generating a static magnetic field within the tube, the coil being provided externally to the tube.

The coil may have a fixed or uniform turn radius. The coil may extend concentrically along a length of the tube, e.g., at a radial separation therefrom. The coil may be configured to generate a substantially uniform magnetic field within the tube, e.g., extending along a long axis of the tube. The turn radius may be significantly greater than the radius of the tube, e.g., about five or six times greater. The furnace may comprise a single coil. The coil may be wrapped continuously about the tube at a fixed radial separation therefrom.

The heating element may be provided externally to the tube. The coil may be provided externally to the heating element, optionally externally to insulation surrounding the heating element(s). The coil may be water-cooled, e.g., provided within a water-cooling jacket.

The furnace may be connectable to a DC power source, e.g., an AC source connected via a rectifier.

The furnace may additionally be configured to pass hydrogen along the tube during treatment, e.g., in order to provide a reducing atmosphere.

The furnace may further comprise the controller of the fourth aspect. The controller may be configured to control the heating element(s) and the conductive coil.

According to a seventh aspect, there is provided an iron-cobalt component treated according to the method of the first or second aspects. The seventh aspect may form part of and/or be used in conjunction with the eighth aspect and/or the ninth aspect.

According to an eighth aspect, there is provided an iron-cobalt component having a maximum relative permeability of at least 20,000 and a mean grain size less than 35 micrometres. The iron-cobalt component may have a mean grain size less than less than 30 micrometres, such as less than 25 micrometres, such as less than 10 micrometres. The iron-cobalt component may have a maximum relative permeability of at least 30,000, such as at least 35,000. The eighth aspect may form part of and/or be used in conjunction with the seventh aspect and/or the ninth aspect.

According to a ninth aspect, there is provided an iron-cobalt component having a yield strength of at least 250 MPa and a maximum relative permeability of at least 20,000. The iron-cobalt component may have a yield strength of at least 400 MPa or a maximum relative permeability of at least 30,000.

According to a tenth aspect, there is provided a transverse flux electrical machine comprising: a lamination treated according to the first or second aspects; a stator according the third aspect; and/or an iron-cobalt component according to the seventh to ninth aspects.

Throughout the ten aspects, an iron-cobalt (FeCo) alloy or component may comprise an alloy in which iron and cobalt are the major or primary (e.g., largest by weight) elements. Iron may be the primary element and cobalt may be the secondary element. For example, the proportion of iron may be at least 47 wt.%, optionally at least 49 wt. %. The proportion of cobalt may be at least 17 wt. %, optionally at least 27 wt.% such as at least 48 wt.%. The iron-cobalt alloy may be based on iron and cobalt but may comprise elements other than FeCo. The iron-cobalt alloy may not comprise nickel. The iron-cobalt alloy or component may be a bulk component, e.g., not a film or wafer.

An example iron-cobalt alloy or component may comprise 17 to 49 wt. % cobalt, up to 2 wt. % vanadium, up to 0.4 wt. % niobium and up to 0.01 wt. % carbon, the balance being iron and up to 0.1 wt.% the usual impurities. The usual impurities found in FeCo alloys may include elements such as magnesium, chromium, manganese, copper, and tantalum. One or more of these elements may be present as an impurity in an FeCo alloy in the invention. The total amount of these impurities should not exceed 0.1 wt% of the alloy.

An example iron-cobalt alloy or component may comprise FeCo-2V. The iron-cobalt alloy may comprise 48.5 wt. % cobalt, 1.9 wt.% vanadium, 0.37 wt. % niobium, 0.25 wt.% magnesium, 0.15 wt.% copper, 0.01 wt. % carbon, the balance being iron and up to 0.1 wt.% impurities. The usual impurities found in FeCo-2V alloys are chromium, manganese, and tantalum. One or more of these elements may be present as an impurity in an FeCo-2V alloy in the invention. The total amount of these impurities should not exceed 0.1 wt% of the alloy.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
FIG. 1 shows a vertical take-off and landing (VTOL) aircraft;
FIG. 2 is a schematic drawing in plan view of an axial end face of a transverse flux machine;
FIG. 3 is a schematic perspective view of a section through the transverse flux machine of FIG. 2 along the line III-III;
FIG. 4 is a schematic perspective view of an example of a stator pole of a stator of the transverse flux machine of FIGS. 2 and 3;
FIG. 5A is a longitudinal cross section through a magnetic field annealing furnace according to the present disclosure;
FIG. 5B is a schematic drawing of the magnetic field annealing furnace of FIG. 5A;
FIG. 6 is a flowchart of a method according to the present disclosure;
FIGS. 7, 9, 11 are plots of magnetisation curves for FeCo samples subjected to a range of annealing conditions;
FIG. 8A is a micrograph of a sample annealed according to a prior method and as tested in FIG. 7; and
FIG. 8B is a micrograph of a FeCo component annealed according to a method of the present disclosure and as tested in FIG. 7;
FIGS.. 10A and 10B are plots of magnetic properties of FeCo components annealed according to prior methods and methods of the present disclosure; and
FIGS.. 10C and 10D are plots of mechanical properties of FeCo components annealed according to prior methods and methods of the present disclosure.

### DETAILED DESCRIPTION

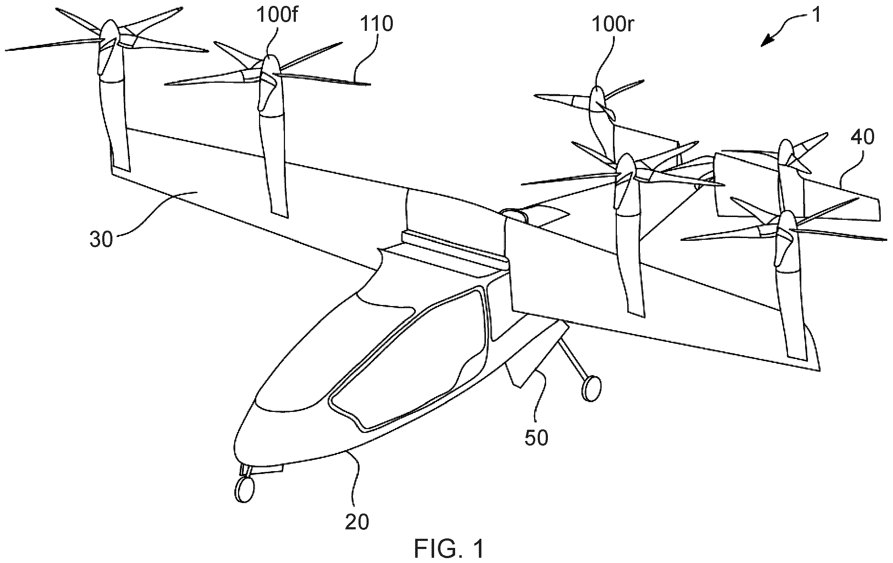

FIG. 1 illustrates a vertical take-off and landing (VTOL) aircraft 1 which may be used for Urban Air Mobility (UAM) applications. The VTOL aircraft 1 includes a fuselage 20 that incorporates a cabin for occupants, wings 30, a rear flight surface 40 and a distributed propulsion system. The distributed propulsion system includes six electrical propulsion units (EPUs), four of which are front EPUs 100f and two of which are rear EPUs 100r. Also visible in FIG. 1 is a retractable undercarriage 50 in which a landing platform or gear, in this case having wheels, can be stowed during flight.

The size of the fuselage 20 and the cabin will depend on the application requirements, but in this example the cabin is sized for five occupants including a pilot. It is however envisaged that some UAM platforms will not require a pilot and will instead be flown under the control of an autopilot system or may be controlled remotely.

Each EPU 100f, 100r has a propeller 110 driven to rotate by an electric motor. The four front EPUs 100f are attached to the wings 30 of the aircraft 1, and the two rear EPUs 100r are attached to the separate flight control surface 40 located towards the rear of the aircraft 1. The wings 30 and the rear control surface 40 are tiltable between a VTOL configuration (shown in FIG. 1) in which the axes of the propellers of the EPUs point upward to provide vertical lift for vertical take-off and landing and a horizontal flight configuration in which the axes of the rotors point forward. The horizontal flight configuration, whilst principally used for horizontal flight, may also be used for taxiing and possibly STOL operation if supported. In other examples, the wings 30 and/or the rear control surface 40 may be fixed in a horizontal position, and the EPUs attached thereto may be tiltable in order to selectively switch between a horizontal and a vertical flight mode.

The electrical systems, including the electric motors that drive the EPUs 110f, 110r of the aircraft 1, receive electrical power from one or more battery packs and/or fuel cell packs located within the aircraft. The battery packs and fuel cells packs may be located within any suitable part or parts of the aircraft, including the EPUs 100f, 100r, the fuselage 20, and wings 30.

Whilst the illustrated aircraft 1 is a VTOL aircraft, it will be appreciated that UAM platforms could also be of the STOL or CTOL type. Further, whilst an electric VTOL (eVTOL) aircraft is shown, the propulsion system could be a hybrid-electric propulsion system that includes both engines (e.g., one or more gas turbine engines) and batteries and/or fuel cells. Hybrid-electric platforms may utilize similar distributed propulsion system configurations, but the underlying power system may be a series-hybrid, parallel-hybrid, turboelectric or other type of hybrid power system.

It will also be appreciated that the configuration of the illustrated VTOL aircraft 1 is merely one example configuration, and that other VTOL aircraft configurations are known and will occur to those skilled in the art. For example, a VTOL aircraft could have a different number of EPUs (e.g., eight EPUs, with four front EPUs 100f and four rear EPUs 100r). Alternatively, the VTOL aircraft could have a multi-copter (e.g., quadcopter) configuration in which the propellers or fans of the EPUs are generally not tiltable and may be ducted. Other VTOL aircraft may have features of more than of type, for example a mix of open and ducted propulsors and/or a mix of tiltable and fixed propulsors. The present disclosure is not limited to any particular type of VTOL aircraft.

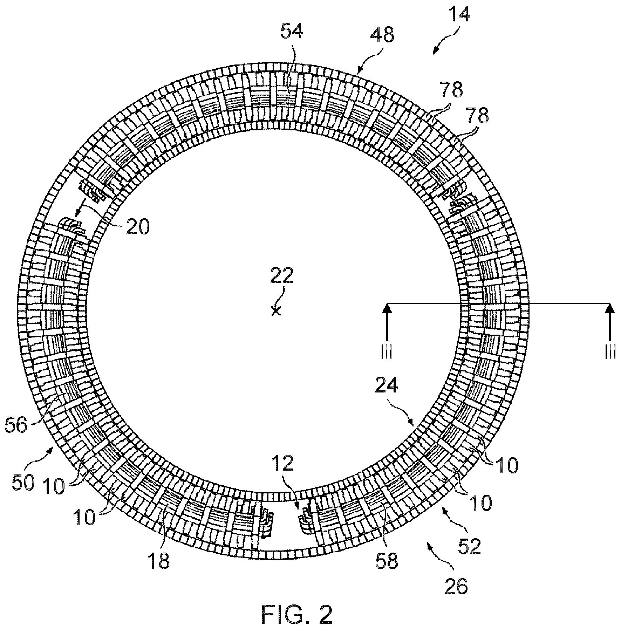

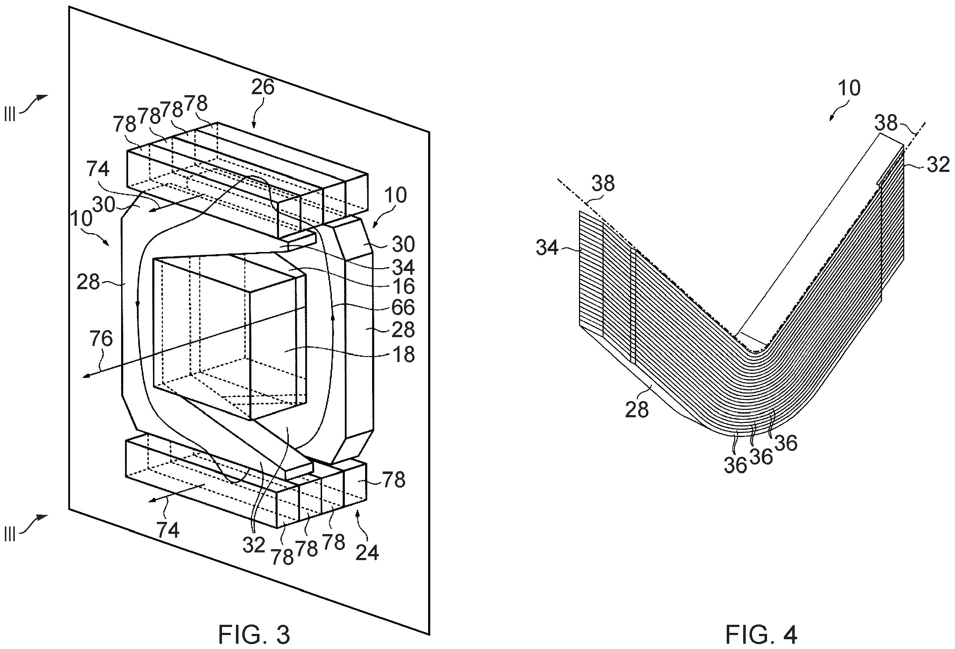

As noted above, each of the six EPUs 100f, 100r include a propeller or fan 110 driven to rotate by an electric motor. The electric motor may be transverse flux machines. FIG. 2 shows a schematic drawing in a plan view of an axial end face of a transverse flux machine 14, including a stator 12 which has a stator winding 18 arranged in a winding space 16 (FIG. 3). The transverse flux machine 14 further includes two rotors arranged so as to be able to rotate relative to the stator 12, namely an inner rotor 24 and an outer rotor 26, which in the present configuration are mechanically coupled to one another for conjoint rotation. In alternative configurations, these rotors may also be rotatable independently of one another. The winding space 16 is formed circumferentially in a circumferential direction 20 in relation to an axis of rotation 22 of the rotors 24, 26.

In a known manner, the rotors 24, 26 include, on the surfaces thereof facing the stator 12, magnet assemblies which, in the present configuration, are designed according to a Halbach array, as disclosed in EP 2 605 367 A1. In alternative configurations, the arrangement of the magnets may also be selected differently. In the present case, the magnets are formed by permanent magnets. Alternatively or additionally, separately excited magnets may also be provided. The magnets are arranged substantially adjacently to one another in the circumferential direction 20 and identified by the reference sign 78.

In the configuration of the transverse flux machine 14 shown in FIG. 2, the stator winding 18 has a segmented design. For this purpose, the winding space 16 is divided up into three segment spaces 48, 50, 52, which are arranged adjacently to one another in the circumferential direction. In each of the segment spaces 48, 50, 52, a respective segment winding 54, 56, 58 is arranged, as will be described in greater detail below. In the present configuration, it is provided that the transverse flux machine 14 is designed for operation with a three-phase AC voltage. For this purpose, a respective phase of the AC voltage is supplied to each of the segment windings 54, 56, 58. The AC voltage is thus a three-phase AC voltage.

From FIG. 2, it may further be seen that, in addition to the stator winding 18 arranged in the winding space 16, the stator 12 includes a plurality of stator poles 10 arranged adjacently to one another in the circumferential direction 20. Two of the stator poles 10 arranged adjacently to one another are shown in a schematic perspective view in FIG. 3.

From FIG. 3, it may be seen that the stator poles 10 each include a body element 30 which is made of a ferromagnetic material. In the installation position, the body element 30 includes two pole heads 32, 34 arranged opposite the respective rotors 24, 26, and a magnetic return path region 28 which, in the installation position, is arranged facing away from the rotors 24, 26. A number of the pole heads 32, 34 of the stator pole 10 corresponds to a number of the rotors 24, 26. In each case, precisely one pole head 32, 34 is thus assigned to a respective rotor 24, 26 or arranged opposite the rotor.

The stator pole 10 is designed, in the installation position, to occupy only a portion of a circumference of the winding space 16 in the circumferential direction 20. The portion may be relatively small in comparison with the circumference. The portion may be designed as required according to the application. The magnetic return path region 28 has a curved shape which adjoins the two pole heads 32, 34, as a result of which the magnetic return path region 28 is designed to define the winding space 16 in part transversely to the circumferential direction 20. In the present configuration, it may be seen that two adjacent stator poles 10 together completely encompass the winding space 16. The adjacently arranged stator poles 16 are arranged at a distance from one another in the present configuration so that, in the circumferential direction, an air gap is formed between adjacently arranged stator poles 10. The air gap may correspond approximately to the extent of a respective stator pole 10 in the circumferential direction.

FIG. 3 further shows that a magnetic main flux 66 is formed in normal operation. This leads to a power 74 as shown in FIG. 3 when an electric current 76 flows in the stator winding 18. For this reason, the functional principle of the transverse flux machine 14 is known to a person skilled in the art, and therefore further detailed explanations in this regard will be dispensed with.

FIG. 4 is a schematic perspective view of one of the stator poles 10 as used in the transverse flux machine 14 according to FIGS. 2 and 3. FIG. 4 shows that the body element 30 includes a plurality of ferromagnetic sheets or laminations 36 electrically insulated from one another, which are arranged so as to directly adjoin one another in a plane 38 spanned by a curve of the curved shape. As a result of this type of curve of the sheets 36, the eddy currents may be suppressed advantageously because the curve allows good adaptation to the actual course of the magnetic flux. As a result, it is possible to achieve low eddy current losses with iron sheets as well. FIG. 4 further shows the two pole heads 32, 34.

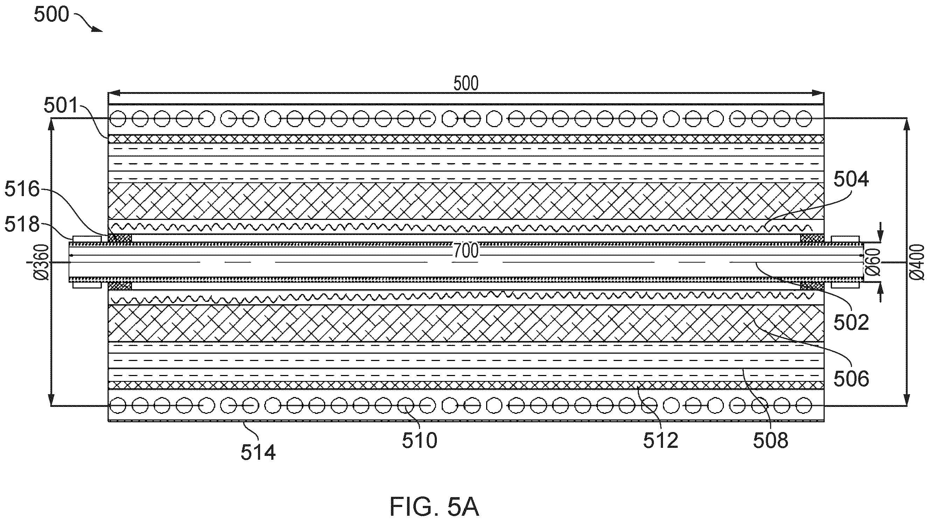

With reference to FIG. 5A, a tube furnace 500 for magnetic field annealing an FeCo component, such as a lamination 36, is described.

The furnace 500 has a generally cylindrical geometry formed by a furnace housing 501. Extending along its central axis, the furnace 500 comprises a quartz tube 502 for receiving one or more components which are to be magnetic field annealed. The tube 502 has a circular transverse cross section with open ends which protrude from the furnace housing 501, such that components to be annealed may be inserted via the ends of the tube 502 into the tube's central region.

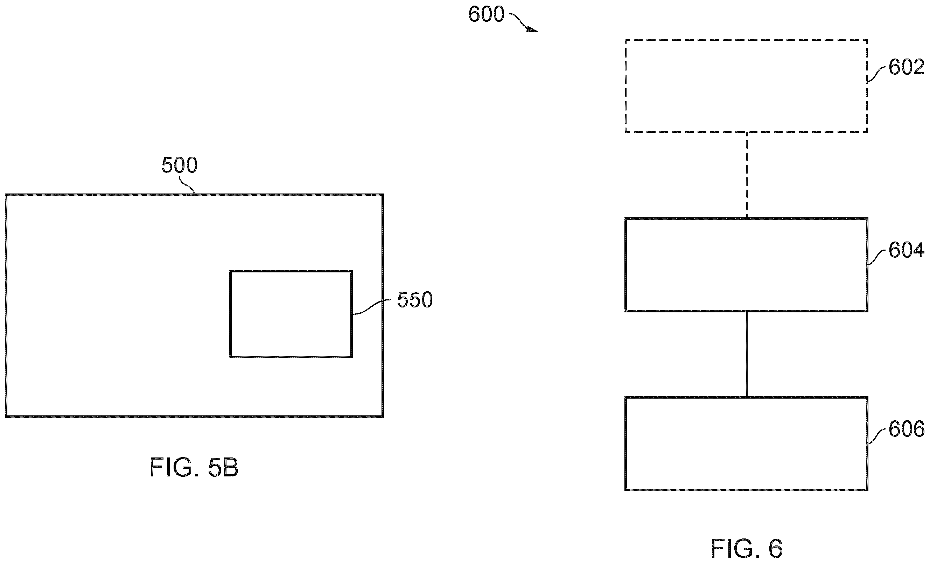

Provided circumferentially about a majority of the length of the tube 502 is a heating element (e.g., an electric heating wire) 504 in thermal communication with the tube 502. The heating element 504 is configured to heat the tube by conduction and/or convection, e.g., in order to raise the temperature within the central region of the tube. The heating element 504 may be controlled by a controller 550 as later described in relation to FIG. 5B.

Circumferentially surrounding the heating element 504, the furnace 500 additionally comprises an alumina (Al₂O₃) furnace lining 506 and layers of insulation 508 for insulating the electric heating wire and the tube, such that the heat generated by the heating element 504 is spatially constrained towards the central axis of the furnace 500 in order to promote the heating of the tube 502. An insulation ring 516 is provided between the tube 502 and the housing 501 at either end, and the tube 502 is additionally provided with a cooling water jacket 518 at either end.

To the exterior of the insulation 508 is provided a copper coil 510. The coil 510 is wound concentrically about, but spaced apart from, the quartz tube 502 and extends along a majority of the length of the tube 502, including the central region of the tube.

The coil 510 is housed within a sealed cavity of annular transverse cross section defined to a radially inner boundary by a ceramic pipe 521, and to a radially outer boundary by a stainless steel furnace shell 514. The annular cavity is filled with water (or another coolant) and in fluid communication with a tank, a pump and a chiller (not shown) which collectively act to cool the coil 510 during use. By actively cooling the coil 510, the furnace 500 permits the use of large currents within the coil 510 for extended durations and thus the generation of strong magnetic fields as later described.

By wrapping the copper coil 510 about the quartz tube 502, when the coil 510 is connected to a DC power source, a static magnetic field is created within the quartz tube 502. Accordingly, a component annealed in the furnace 500 is subjected to the static magnetic field when a DC current is passed through the coil 510.

In the illustrated example, the tube has an external diameter of 60 mm and a length of 700 mm, and the copper coil 510 has 32 turns at a radius of approximately 180 mm. The radial separation between the tube 502 and the copper coil is approximately 150 mm. Accordingly, the turn radius of the coil 510 is significantly greater than (e.g., approx. 6 times) the radius of the quartz tube 502. By wrapping the coil 510 concentrically about the tube 502 at a constant distance therefrom, a substantially aligned and uniform static magnetic field is produced within the tube 502.

The furnace 500 additionally comprises and/or is in electrical communication with a DC power source (e.g., the furnace 500 has a rectifier in communication with an AC power source).

Although not shown, the quartz tube 502 is providable in fluid communication with a hydrogen tank via a hydrogen pipeline, for passing hydrogen down the tube from one end to the other during the annealing process. This ensures a reducing atmosphere for the FeCo component being annealed.

The furnace 500 may additionally comprise (e.g., as shown schematically in FIG. 5B) and/or be in communication with a controller 550, the controller 550 being configured to perform the method 600 described later in relation to FIG. 6 by controlling the heating element 504 and coil 510 via the DC power source.

In use, an FeCo sample is placed within the quartz tube 502, preferably at its midpoint or otherwise within the tube's central heating region. The copper coil 510 is connected to a DC power source, and a steady flow of hydrogen gas is passed through the quartz tube 502 in order to provide a reducing atmosphere during the annealing process.

The heating element 504 is operated so as to heat the tube furnace at a constant rate (e.g., 15 °C / min) until a desired hold temperature (e.g., 700 to 900 °C, such as 880 °C) is reached. The tube is then maintained at the hold temperature for a desired hold duration (e.g., 3 to 9 hours), after which the tube is permitted to cool at a constant rate (e.g., 5 °C / min) until a certain temperature is reached (e.g., 150 °C).

During at least part of the heat treatment (which is considered to include the heating phase, the hold phase, and the cooling phase of the above temperature profile), a DC current is passed through the copper coil 510. The current passed through the coil 510 and the scale of the furnace components are selected such that a magnetic field in the region 3000 - 6000 A/m is generated within the tube 502.

As will be described later, the magnetic properties of the annealed FeCo component are improved along the direction of the magnetic field produced by the coil 510. The magnetic properties of the annealed FeCo component are not substantially affected in other (e.g., perpendicular) directions. Accordingly, the orientation of the FeCo component when placed into the quartz tube 502 should be considered in the context of the desired anisotropy of the magnetic properties of the annealed FeCo component.

Although the furnace 500 has been described in relation to the illustrated embodiment having a tube 502 of diameter 60 mm and length 700 mm, and a coil 510 with 32 turns of radius 180 mm, it will be understood that the furnace 500, including tube 502 and coil 510, may be scaled-up to accommodate a greater number of components and/or components of greater dimensions whilst maintaining the temperature and magnetic field conditions subsequently described.

The furnace 500 provides good control over heat treatment parameters such as temperature, heating/cooling rate and magnetic field strength. For example, the applied field is not subject to placement variability as is the case for a coil wrapped directly around the component in the furnace. It is also suited to providing high magnetic fields as the copper coils can be cooled thus increasing coil conductivity.

With reference to FIG. 6, a method 600 of treating an iron-cobalt component is described. The iron-cobalt component may be a lamination 36 for the rotor or stator of an electrical machine, such as the transverse flux electrical machine 14 of FIGS. 2 and 3.

The method 600 optionally comprises 602 aligning a dimension of the component with the central axis of the tube 502, such that the directional magnetic properties of the method 600 may be generated in a desired direction of the component. For example, when the component is a lamination 36, the method may comprise aligning an in-plane length dimension with the longitudinal axis of the tube, such that the magnetic field generated by the coil 510 is aligned with the in-plane length dimension of the lamination 36.

The method 600 further comprises 604 heat treating the component using a temperature of at least 700 °C. The heat treatment comprises a heating phase at a constant rate (e.g., 15 °C / min), a hold phase at a hold temperature, and a cooling phase at a constant rate (e.g., 5 °C/min). The temperature of at least 700 °C may be the hold temperature, such that the component is held at this temperature for the duration of the hold phase.

The hold phase may have a duration of at least 1 hour, and preferably between 3 and 9 hours, to permit the thermodynamic processes of annealing to occur to a desired extent.

A heat treatment temperature of greater than 900 °C may be unnecessarily energy intensive and/or may promote undesirable mechanical properties. For example, using temperatures between 700 and 900 °C may ensure that undesirable microstructural features are not produced (e.g., a microstructure having undesirable phases and/or grains of excessive dimension for the desired mechanical properties).

The method 600 additionally comprises 606 applying a static magnetic field of at least 3000 A/m during the heat treatment. The static magnetic field is preferably a substantially uniform magnetic field, such as the magnetic field generated by the coil 510 within the tube 502 of the furnace 500. A static and uniform magnetic field ensures that the component is subjected to the same magnetic field throughout its dimensions and so ensures that, although anisotropic, there are no significant spatial variations in the mechanical and magnetic properties across the component.

The present inventors have determined that a magnetic field of 5500 A/m will also produce desirable results, but 3000 A/m may be the minimum necessary to achieve the effects described later.

The magnetic field may be applied to the component during any portion of the heat treatment. For example, the magnetic field may be applied in any of the following regimes: throughout the whole heat treatment; throughout the holding phase; throughout the cooling phase; throughout the holding and cooling phases only; during only part of the holding phase; during only part of the cooling phase; and during only part of the holding phase and only part of the cooling phase.

The method 600 may be used to form a stator 12 for a transverse flux electric machine 14. A plurality of laminations 36 may be treated according to the method 600, a first subset of the plurality of treated laminations 36 being assembled into a first stator core, and a second subset of the plurality of treated laminations being assembled into a second stator core. The stator may then be assembled from the plurality of stator cores.

### Experimental data

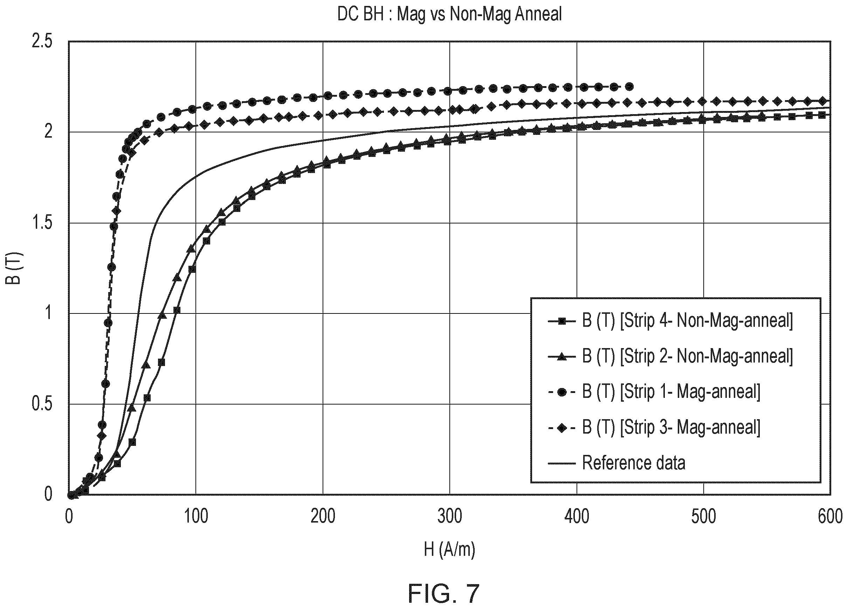

Tables 1 and 2 summarise the data described in relation to FIGS. 7 to 11. In particular, Table 1 summarises the mechanical properties of the FeCo samples of FIGS. 7 to 11, while Table 2 summarises the magnetic properties of the FeCo samples of FIGS. 7 to 11.

**TABLE 1**

| **Sample** | **Hold temp, °C** | **Hold duration, hours** | **Magnetic field strength, A/m; regime** | **Grain size, micrometres** | **Yield strength, MPa** | **Ultimate tensile strength, MPa** | **Strain to failure, %** |
|---|---|---|---|---|---|---|---|
| 1 | 750 | 3 | 0 | 7.1 ± 0.1 | 431.7 ± 14.1 | 531.2 ± 15.2 | 4.9 ± 0.4 |
| 2 | 880 | 3 | 0 | 27.2 ± 1.4 | 270.1 ± 8.5 | 454.9 ± 4.6 | 5.2 ± 0.4 |
| 3 | 880 | 6 | 0 | 33.2 ± 1.3 | 267.7 ± 1.5 | 415.5 ± 28.2 | 4.4 ± 0.8 |
| 4 | 880 | 9 | 0 | 34.9 ± 1.2 | 248.8 ± 2.5 | 454.7 ± 85.6 | 5.7 ± 2.9 |
| 5 | 750 | 3 | 5500; throughout | 6.7 ± 0.1 | 432.9 ± 2.5 | 689.6 ± 47.6 | 8.0 ± 1.1 |
| 6 | 880 | 3 | 5500; throughout | 20.4 ± 0.4 | 263.3 ± 3.9 | 511.9 ± 46.2 | 7.3 ± 1.2 |
| 7 | 880 | 6 | 3300; throughout | 31.6 ± 1.8 | 275.4 ± 7.0 | 420.3 ± 51.3 | 4.7 ± 1.4 |
| 8 | 880 | 6 | 5500; throughout | 24.1 ± 0.6 | 278.5 ± 2.1 | 447.4 ± 17.2 | 5.1 ± 0.4 |
| 9 | 880 | 9 | 5500; throughout | 26.6 ± 1.3 | 279.9 ± 2.2 | 472.8 ± 29.5 | 5.9 ± 0.9 |
| 10 | 880 | 6 | 5500; Hold - 3h off, 3h on; cooling - on | 31.3 ± 2.2 | 257.8 ± 6.9 | 407.9 ± 34.0 | 5.2 ± 0.3 |
| 11 | 880 | 6 | 5500; Hold - 6h on | 32.6 ± 1.2 | 271.0 ± 11.1 | 477.9 ± 10.7 | 4.9 ± 0.9 |
| 12 | 880 | 6 | 5500; Cool - on | 29.2 ± 0.3 | 277.3 ± 5.0 | 385.9 ± 82.7 | 5.3 ± 2.1 |

**TABLE 2**

| **Sample** | **Hold temp, °C** | **Hold duration, h** | **Magnetic field strength, A/m; regime** | **Mu max** | **Core loss (W/kg) AC @ 2T, 400 Hz** | **Coercivity (A/m) AC @ 2T, 400 Hz** | **B_sat DC @ 400 AIm** |
|---|---|---|---|---|---|---|---|
| 1 | 750 | 3 | 0 | 7119 | 52.25 | 151.38 | 2.02 |
| 2 | 880 | 3 | 0 | 10593 | 41.35 | 108.26 | 2.06 |
| 3 | 880 | 6 | 0 | 10844 | 38.5 | 97.7 | 2.03 |
| 4 | 880 | 9 | 0 | 11998 | 40.9 | 104.5 | 2.06 |
| 5 | 750 | 3 | 5500; throughout | 21356 | 45.75 | 122.61 | >2.15 |
| 6 | 880 | 3 | 5500; throughout | 38729 | 35.1 | 86.89 | >2.15 |
| 7 | 880 | 6 | 3300; throughout | 35874 | 38.4 | 90.82 | >2.13 |
| 8 | 880 | 6 | 5500; throughout | 34175 | 34.4 | 85.9 | >2.21 |
| 9 | 880 | 9 | 5500; throughout | 30209 | 34.75 | 89.05 | >2.14 |
| 10 | 880 | 6 | 5500; Hold - 3h off, 3h on; coolinq - on | 37769 | 37.2 | 92.73 | >2.14 |
| 11 | 880 | 6 | 5500; Hold - 6h on | 26583 | 41.05 | 103.29 | >2.14 |
| 12 | 880 | 6 | 5500; Cool - on | 23648 | 40.55 | 106.51 | >2.13 |

With reference to FIG. 7, the magnetisation curves (or BH-loops) for four FeCo strips are described. The FeCo strips, formed from Vacodur 49 (RTM) (comprising 49.8 wt.% cobalt, 2.0 wt.% vanadium, 0.4 wt.% niobium, 0.3 wt.% magnesium, 0.2 wt.% copper, the balance being iron (no less than 47 wt.%) and up to 0.1wt. % the usual impurities) and having dimensions of 300 mm x 30 mm and a thickness of 0.2 mm were heat treated at 880 °C for a hold time of 6h, with a heating rate of 15 °C/min and a cooling rate of 5 °C/min, in a hydrogen atmosphere using the furnace 500. Strips 1 and 3 were subjected to a magnetic field of 5500 A/m throughout the heat treatment (i.e., throughout the heating phase, holding phase and cooling phase). Strips 2 and 4 were subjected to the same heat treatment in the same furnace 500 but the coil 510 was not activated. The properties of the strips were subsequently analysed by single sheet testing according to IEC 60404-3:2022, which uses a long strip of soft magnetic material that is placed in a fixture containing two windings, an exterior primary winding for magnetization and an interior secondary winding for voltage measurement. Flux closure is made by a magnetic circuit consisting of two U shaped yokes made of soft magnetic material.

As shown in FIG. 7, the magnetic saturation of the magnetic field annealed (MFA) strips is substantially greater than for the non-MFA strips. Further, the initial DC magnetization response shows a faster increase in magnetic saturation and therefore a higher permeability (as shown by the gradient of the BH curve) for the MFA strips than the non-MFA strips. As such, the method 600 of the present disclosure improves the magnetic properties of the FeCo component compared with an FeCo component treated according to prior methods.

In an electrical machine this means that the same magnetic field can be achieved from a smaller applied electric field, improving the efficiency and power density of the machine. Moreover, core loss is reduced which means that the efficiency of energy conversion is improved and less waste heat is produced.

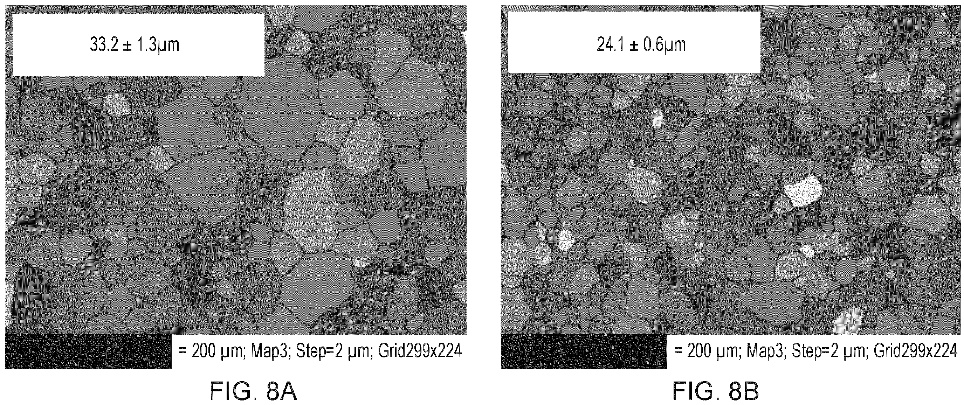

FIG. 8A and 8B show electron backscatter diffraction (EBSD) micrographs for the non-MFA and MFA strips, respectively, (specifically, FIG. 8A shows strip 2 and FIG. 8B shows strip 1) of FIG. 7. The EBSD micrographs were captured by a field emission scanning electron microscope with an accelerating voltage of 20 kV. The mean grain size was determined by observing and analysing at least three positions using the post-processing software Channel 5. The MFA strips have a mean grain size of 24.1 +/- 0.6 micrometres, whereas the non-magnetic annealed strips have a mean grain size of 33.2 +/- 1.3 micrometres. Accordingly, by applying a static magnetic field of 5500 A/m throughout the heat treatment, a smaller grain size is achieved. The smaller grain sizes of the MFA samples are believed to result in the improved mechanical properties of the MFA samples as reflected in table 1, which demonstrates a higher yield strength, a higher ultimate tensile strength and a greater strain to failure of the MFA samples. Strips 1 and 2 are samples 8 and 3, respectively, in tables 1 and 2.

In summary, FIGS. 7, 8A, 8B demonstrate that the application of a magnetic field of 5500 A/m throughout a heat treatment including a holding phase at 880 °C for 6h improves both the magnetic and mechanical properties of the FeCo component.

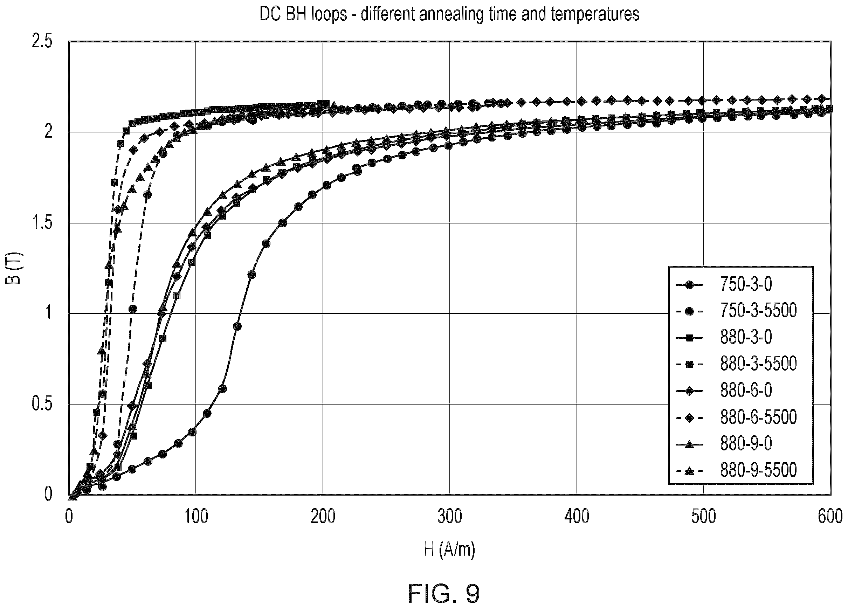

FIG. 9 shows magnetisation curves (or BH loops) for a range of samples subjected to heat treatments with different holding temperatures and durations, both with and without the application of a magnetic field of 5500 A/m. The key in FIG. 9 indicates the holding temperature followed by the holding duration, followed by the applied magnetic field, which is applied throughout the heat treatment. Table 3 below translates the key in FIG. 9 into the sample number in Tables 1 and 2.

**TABLE 3**

| **Key in** **FIG. 9** | **Sample number in tables 1 and 2** |
|---|---|
| 750-3-0 | 1 |
| 750-3-5500 | 5 |
| 880-3-0 | 2 |
| 880-3-5500 | 6 |
| 880-6-0 | 3 |
| 880-6-5500 | 8 |
| 880-9-0 | 4 |
| 880-9-5500 | 9 |

The heat treatment regimes therefore include the following holding temperatures and durations: 750 °C for 3 hours; 880 °C for 3 hours; 880 °C for 6 hours; and 880 °C for 9 hours. It is evident that the MFA samples, which curves have broken lines rather than the solid lines of the non-MFA samples, have improved magnetic properties compared with the non-MFA samples, including a higher magnetic saturation and a higher maximum permeability. The improved magnetic properties of the MFA samples, compared with the non-MFA samples, are seen for all holding times and temperatures tested. The highest magnetic saturation is achieved by MFA sample 8 (880 °C, 6h), followed by MFA sample 6 (880 °C, 3h), followed by MFA sample 9 (880 °C, 9h).

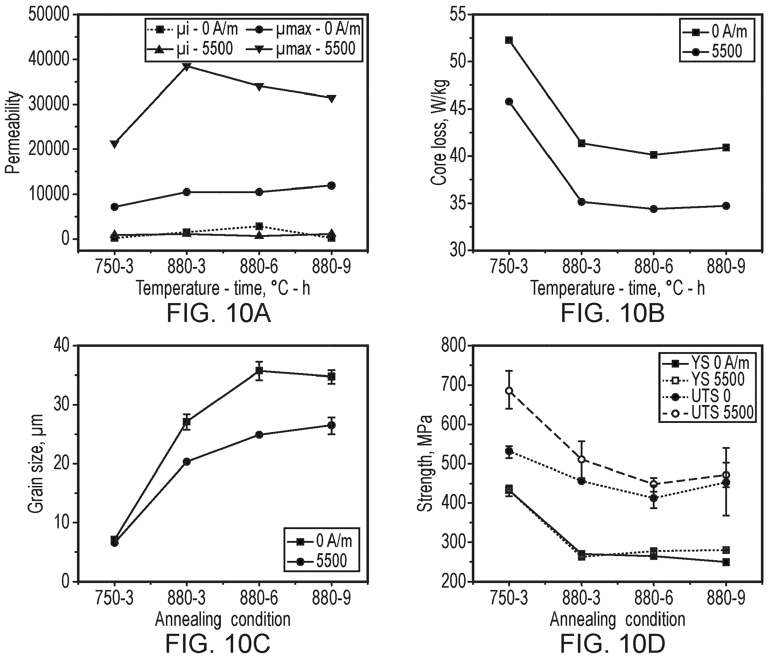

FIGS. 10A-10D show a range of magnetic and mechanical properties for the eight samples of FIG. 9.

FIG. 10A shows the initial relative magnetic permeability (µᵢ) and maximum relative magnetic permeability (µₘₐₓ) for the eight samples, the four MFA samples being indicated by upright and upside-down triangular data points, and the four non-MFA samples being indicated by circular and square data points. The relative permeability values were determined by calculating the slope of the B-H loop (relative to µ₀ , the permeability of free space), the maximum permeability being the largest permeability measured cross the whole DC magnetisation curve, and the initial permeability being the permeability close to zero.

The initial relative permeabilities µᵢ are similar for both the MFA and non-MFA samples. However, the maximum relative permeabilities of the MFA samples are significantly greater than for the non-MFA samples. In particular, the maximum permeabilities of the MFA samples are at least double those of the non-MFA samples, for all heat treatment regimes. The maximum relative permeabilities of all the MFA samples are at least 20,000 across the range of holding temperatures and durations, and the maximum relative permeability appears to be greatest for the 880 °C, 3h MFA sample, followed by the 880 °C, 6h sample, followed by the 880, 9h sample.

Indeed, the 750°C, 3h MFA sample has higher maximum relative permeability than the 880°C, 9h non-MFA sample. This is surprising because a longer heat treatment time at a greater temperature is expected to produce larger grains which provide a greater maximum relative permeability. As such, the present invention may permit improved magnetic properties at more energy efficient heat treatment regimes.

A higher magnetic permeability may improve the operation of electrical machines by allowing for faster switching, reduced current levels and reduced cooling requirements.

The above effects are mirrored in FIG. 10B, which shows reduced core losses for the MFA samples when compared with the non-MFA samples. The core losses were determined by calculating the area enclosed by the AC B-H curve. In an electrical machine, reduced core losses mean that the efficiency of energy conversion is improved and less waste heat is produced.

Referring to FIG. 10C, it is evident that the mean grain sizes of the MFA samples are smaller than for the non-MFA samples, with the exception of the 750°C, 3h samples which are very similar. It is notable that the favourable magnetic properties of FIGS. 10A, 10B are achieved with smaller mean grain sizes as shown in FIG. 10C. Indeed, it is surprising that, even though the 750°C, 3h MFA sample has a very similar mean grain size to the non-MFA sample, the maximum relative permeability is still at least double that of the non-MFA sample per FIG. 10A. The error bars in FIG. 10C were calculated by standard deviation.

FIG. 10D shows the ultimate tensile strength (UTS) and yield strength (YS) of each of the four MFA and the four non-MFA samples. These values were determined according to standard ASTM E8 using a universal testing machine of instron 5567 at room temperature with a crosshead speed of 0.3 mm/min. Three samples were tested per condition. The error bars in FIG. 10D were calculated by standard deviation. The yield strengths appear similar for the 750°C, 3h and 880°C, 3h samples, but the yield strengths of the MFA samples at 880°C, 6h and 880°C, 9h are higher than their non-MFA counterparts.

The ultimate tensile strength is shown in FIG. 10D by the dashed lines. The UTS is greater for the MFA samples at each annealing time and temperature combination investigated.

A temperature of about 880 °C and a heat treatment time of about 3 hours was found to provide excellent magnetic properties to the Fe-Co alloy. The peak increase in permeability was observed for these treatment conditions. Excellent magnetic properties were also observed at longer treatment times, but the lower time is preferred in view of its resulting lower energy consumption. A temperature of about 750 °C and a treatment time of about 3 hours was found to provide an excellent combination of mechanical and magnetic properties, with lower energy consumption.

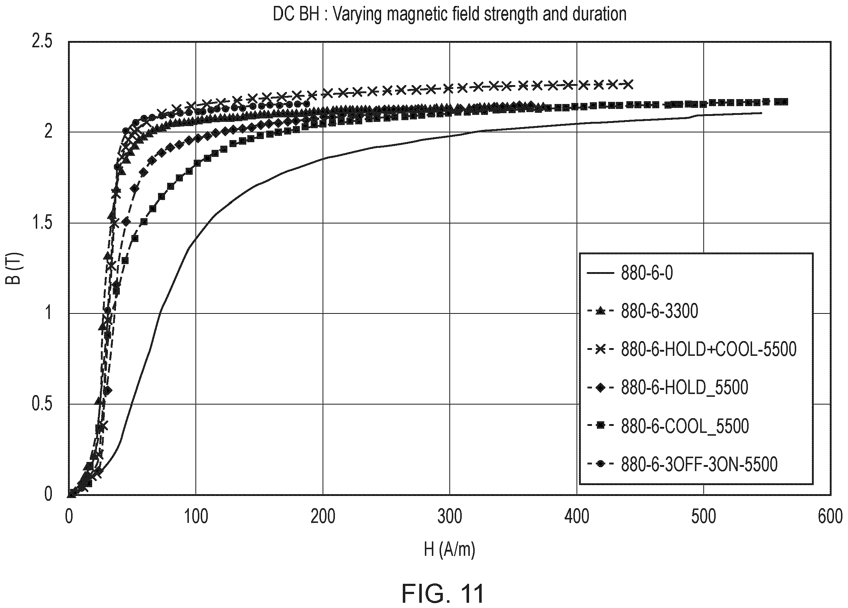

FIG. 11 shows magnetisation curves (or BH loops) for samples subjected to the same heat treatment regime - a holding temperature of 880 °C for a holding duration of 6h - but different magnetic field regimes.

The solid curve (880-6-0) represents a non-MFA sample, and the remaining five curves represent MFA samples subjected to different magnetic field application regimes. The sample number in tables 1 and 2; the key in FIG. 11 and the magnetic field regimes are summarised in Table 4 below.

**Table 4**

| **Sample number in tables 1 and 2** | **Key in** **FIG. 11** | **Magnetic field regime** |
|---|---|---|
| 3 | 880-6-0 | none |
| 7 | 880-6-3300 | 3300 A/m applied throughout the heat treatment |
| 8 | 880-6-HOLD+COOL-5500 | 5500 A/m applied throughout the heat treatment |
| 11 | 880-6-HOLD_5500 | 5500 A/m applied during the holding phase only |
| 12 | 880-6-COOL_5500 | 5500 A/m applied during the cooling phase only |
| 10 | 880-6-3OFF-3ON-COOL-5500 | 5500 A/m applied for 3h during the holding phase and then throughout the cooling phase |

The magnetic field application regime with the most favourable magnetic properties (e.g., magnetic saturation and maximum relative permeability) was the 880-6-HOLD+COOL-5500 (5500 A/m applied throughout the heat treatment) sample (sample 8 in tables 1 and 2). However, it is clear that the favourable effects of magnetic field annealing are present even for an applied magnetic field of 3300 A/m, and also for application durations as short as the ~2.5h of the cooling phase of the 880-6-COOL_5500 (5500 A/m applied during the cooling phase only) sample (sample 12 in tables 1 and 2).

Accordingly, by varying heat treatment process parameters, it was found that the MFA effect is consistent across the heat treatment temperatures (750, 880°C) and annealing times (3, 6, 9 h) tested.

In addition to the data contained in FIGS. 7-10, Tables 1 and 2 include the strain to failure percentages for samples 1 to 12. The data in Table 1 show that the MFA samples have increased strain to failure compared with the non-MFA samples.

In summary, the data described above and shown in FIGS. 7-10 and Tables 1 and 2 demonstrate that the method 600 and furnace 500 may be used to achieve:
- Improved magnetic properties relative to the conventional magnetically optimized sample, for equivalent mechanical performance. For example, by turning on the magnetic field during the later stages of the MFA treatment, grain size may be allowed to reach that of the non-MFA samples, thereby further increasing magnetic properties.
- Improved mechanical performance relative to the conventional mechanically optimized sample, for equivalent magnetic performance, such as by performing the MFA treatment at a lower annealing temperature or shorter duration to produce a smaller grain size. The magnetic properties however would remain similar to that of the non-MFA sample, despite the smaller grain size. This would also have the added benefit of reducing process cost.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

It will also be appreciated that whilst the invention has been described with reference to aircraft and aircraft propulsion systems, the electric machine drive techniques described herein could be used for many other applications. These include, but are not limited to, automotive, marine and land-based applications.

## Claims

1. A method (600) of treating an iron-cobalt component, the method comprising:
heat treating (604) the component using a temperature of at least 700 °C;
applying (606) a static magnetic field of at least 3000 A/m to the component during the heat treatment.

2. The method of claim 1, wherein the heat treatment comprises a heating phase, a holding phase and a cooling phase, wherein the magnetic field is applied during at least part of the cooling phase.

3. The method of claims 1 or 2, wherein the heat treatment comprises a heating phase, a holding phase and a cooling phase, wherein the magnetic field is applied during at least part of the holding phase.

4. The method of any preceding claim, wherein the heat treatment comprises a heating phase, a holding phase and a cooling phase, wherein the magnetic field is applied throughout the holding phase and/or throughout the cooling phase.

5. The method of any preceding claim, wherein heat treating the component comprises heat treating the component using a temperature of at least 700 °C for a duration of at least 1 hour.

6. The method of any preceding claim, wherein heat treating the component comprises heat treating the component using a temperature of up to 900 °C for a duration of up to 9 hours.

7. The method of any preceding claim, wherein applying a static magnetic field comprises applying a static magnetic field of up to 6000 A/m.

8. The method of any preceding claim, comprising applying a substantially uniform magnetic field.

9. The method of any preceding claim, comprising applying a static magnetic field using a conductive coil with a direct current flowing therethrough.

10. The method of any preceding claim, further comprising aligning a feature of the component with the magnetic field.

11. The method of any preceding claim, wherein the component comprises an iron-cobalt lamination for a stator core of an electrical machine, optionally a transverse flux electrical machine.

12. The method of claim 11, comprising aligning an in-plane direction of the lamination with the applied magnetic field.

13. A method of forming a stator for a transverse flux electrical machine, the method comprising:
treating a plurality of laminations according to the method of claims 11 or 12;
assembling a plurality of stator cores from the plurality of laminations;
assembling a stator from the plurality of stator cores.

14. A transverse flux electrical machine comprising a stator according to claim 13.

15. A system comprising:
a tube furnace for magnetic field annealing; and
a controller for controlling the tube furnace, configured to perform the method of any of claims 1 to 11.
